# EUROPEAN PATENT SPECIFICATION

(11) **EP 1 084 466 B1**
(45) Date of publication and mention of the grant of the patent: **20.04.2005**
(21) Application number: 00920484.3
(22) Date of filing: 09.03.2000
(51) Int. Cl.: G06F 5/06, G06F 13/40

(54) **DATA PROCESSING ARRANGEMENT AND MEMORY SYSTEM**
DATENVERARBEITUNGSVORRICHTUNG UND SPEICHERSYSTEM
DISPOSITIF DE TRAITEMENT DE DONNEES ET SYSTEME DE MEMOIRE

(30) Priority: 31.03.1999 US 282325; 24.05.1999 US 316560
(43) Date of publication of application: 21.03.2001
(73) Proprietor: Koninklijke Philips Electronics N.V., 5621 BA Eindhoven (NL)
(72) Inventor: DURANTON, Marc, NL-5656 AA Eindhoven (NL)
(74) Representative: Charpail, François
(86) International application number: PCT/EP2000/002079
(87) International publication number: WO 2000/060448

(56) References cited:
- EP-A- 0 353 942
- EP-A- 0 695 988
- US-A- 5 663 910
- SHYH-CHANG SU ET AL: "A MEMORY-MAPPED INTERPROCESSOR COMMUNICATION ARCHITECTURE USING FIFO RAMS" MICROPROCESSING AND MICROPROGRAMMING,NL,ELSEVIER SCIENCE PUBLISHERS, BV., AMSTERDAM, vol. 34, no. 1 / 05, 1 February 1992 (1992-02-01), pages 187-191, XP000339334 ISSN: 0165-6074

## Description

### FIELD OF THE INVENTION

The present invention concerns a data processing arrangement comprising a first processor for providing successive sets of input data, a second processor for receiving successive sets of output data and a memory system comprising a plurality of memory circuits for receiving the successive sets of input data and providing the successive sets of output data.

The invention also relates to a method of processing data carried out in such a data processing arrangement. The invention is particularly relevant for applications related to Multimedia involving streams of data.

### BACKGROUND ART

The American patent N°4,930,066 discloses a memory system comprising a plurality of data input/output ports for providing page addresses, a plurality of memory banks for storing pages of data and a switching network for rotating connections between the data input/output ports and the memory banks. An address is transmitted to the memory system in association with the data. The described system comprises therefore, for each input/output port an interface for receiving the data and the associated address. This results in delays when storing data. Moreover this interface is complex in terms of hardware. Besides a memory bank is accessible for either reading or writing but not both. A memory access conflict may occur when a memory bank is selected for both receiving a data to be written and providing a data to be read. The configuration described here is prone to conflicts when two different ports need to access two pages located in the same bank.

Another FIFO memory comprising several memory devices is shown in the disclosures EP 0 695 988 A2.

### SUMMARY OF THE INVENTION

A first and second aspect of the invention are defined in independent claims 1 and 8, respectively. Further embodiments of the invention are specified in the appended dependent claims.

According to the invention, such a data processing arrangement comprises a master controller for setting up the memory system by means of control commands, associated with a set of input data and a set of output data, and the memory system further comprises a programmable control unit for, on the basis of the control commands, selecting a first memory circuit and generating a write-address in said first memory circuit when a data from the set of input data is provided by the first processor, and for, on the basis of the control commands, selecting a second memory circuit and generating a read-address in said second memory circuit when a data from the set of output data is required by the second processor.

The control commands, which are associated with a set of input data and a set of output data, set up the memory system so that it autonomously generates addresses for the data of the two sets. The control unit in the memory system internally calculates these addresses of the input and output data and selects itself a memory circuit for each data. Thus, there is no need for a processor to transmit addresses for providing or receiving data. In fact, a processor does not need to know anything about the internal behavior of the memory system when it requires or provides sets of data. As a result, any communication protocol that may exist between a processor and such a memory system and the resulting hardware implementation are greatly simplified in comparison with the prior art.

Another advantage of the invention relates to the following aspects. In a data processing arrangement in accordance with the invention, the memory system may receive input data from the first processor and, at the same time, the memory system may provide output data to the second processor. The control unit enables access conflicts to be countered by selecting two different memory circuits for the input and output data. This prevents corruption of stored data. A memory circuit may also be of a type which allows, at a given instant, either reading or writing, but not both. Such memory circuits are relatively cheap so that cost-efficiency is another advantage of the invention.

The read and write addresses may be generated in different ways. One way of obtaining these addresses is to load lookup tables with all the addresses associated with the set of input data and the set of output data. These lookup tables are, however, complex to implement and require a large chip area.

A preferred embodiment of the present invention, claimed in Claim 2, comprises a read counter and a write counter for generating the read and write addresses which determine where data is to be stored or fetched, respectively. These two counters are a simple implementation of means for providing the read address and the write address.

There also various ways for the memory system to know when data from the set of input data is provided by the first processor and when data from the set of output data is required by the second processor. One solution is that the two counters mentioned hereinbefore count one unit up or down in response to the clock pulse of a clock signal. This implies that the input and output data is received or provided at the fixed rate determined by the clock signal.

Another embodiment of the invention as claimed in Claim 4 introduces a read signal and a write signal from the processors. A processor sends a read or a write signal to the memory system when it requires new output data or when it provides new input data. These signals allow the processors to receive or provide data asynchronously. In this embodiment of the data processing arrangement, the two processors can access the memory system at their own speeds. This is particularly advantageous if various processors have their own processing speeds and, in this case, if they cannot receive or provide data at the same rate. Compared to the solution where the data is transmitted in response to a clock signal, the embodiment as claimed in Claim 4 offers the major advantage of greater flexibility.

The invention also relates to a memory system comprising a plurality of memory circuits for receiving successive sets of input data and for providing successive sets of output data, the memory system also comprising a control unit which is programmable by means of control commands associated with a set of input data and a set of output data, on the basis of these control commands there being selected a first memory circuit and a write address being generated in said first memory circuit when data from the set of input data is received, whereas a second memory circuit is selected and a read address is generated in said second memory circuit when data from the set of output data is provided. The invention more generally concerns a method of processing data that is, possibly, carried out in the claimed data processing arrangement.

The specific aspects of the invention will now be explained with reference to the embodiments described hereinafter and considered in connection with the accompanying drawings, in which :
Fig.1 is a block diagram of an embodiment of a data processing arrangement in accordance with the present invention.
Fig.2 is a block diagram of a preferred embodiment of a data processing arrangement in accordance with the invention ;
Fig.3 is a block diagram of a memory system showing the internal connections between its various components ;
Fig.4 depicts the 8-bit word MC_W.

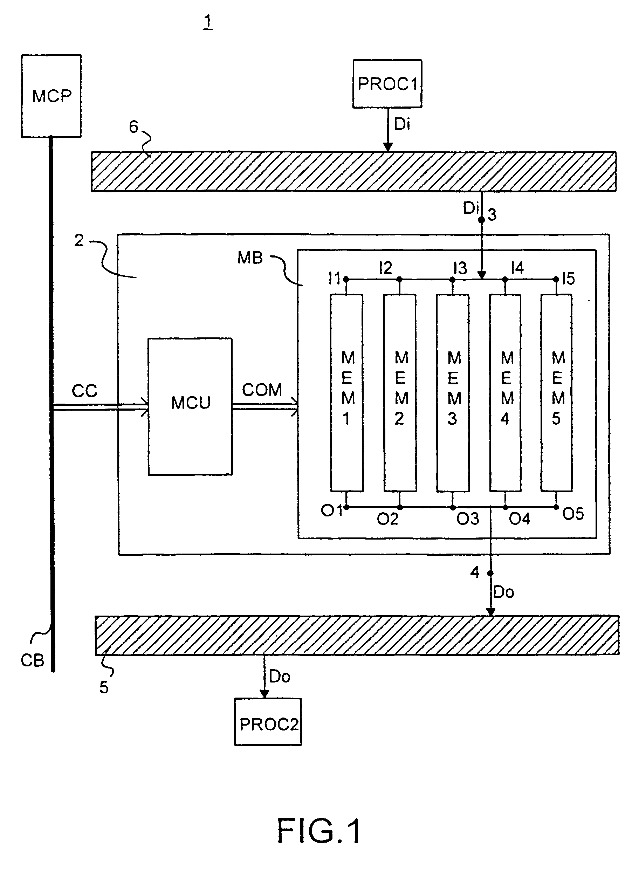

A data processing arrangement 1 in accordance with the invention is shown in Fig.1. It comprises a memory system 2, a first processor PROC1 for providing successive sets of input data to the memory system 2 and a second processor PROC2 for receiving successive sets of output data from the memory system 2. PROC1 provides data Di through a crossbar 6 and an input port 3 of the memory system 2. PROC2 receives data Do through a crossbar 5 and an output port 4 of the memory system 2. The memory system 2 comprises a memory control unit MCU and a memory block MB. This memory block MB, in which data is physically stored, is composed of an arbitrary number (five here) of independent memory circuits MEM1, MEM2, MEM3, MEM4 and MEM5. These memory circuits may, in a preferred embodiment of the invention, for example, be SRAM (Static Random Access Memory) of 256 words of 10 bits. When data Di has to be written therein, each memory circuit MEM 1,...,MEM5 is accessible through a respective input port I1, I2, I3, I4 or I5 and when data Do has to be read, each memory circuit MEM1, ..., MEM5 is accessible through a respective output port O1, O2, O3, O4 or O5.

The data processing arrangement 1 also comprises a master controller MCP which, via a control bus CB, transmits control commands CC to the control unit MCU. These control commands CC are associated with a set of input data received from PROC1, so as to be written in the memory block MB. These control commands are also associated with a set of output data required by PROC2 and to be fetched from the memory block MB. The commands CC are transmitted to the control unit MCU before the processing of the set of input data and the processing of the set of output data by PROC1 and PROC2, respectively. The commands CC operate a setup of the control unit MCU. The main function of the control unit MCU in the memory system 2 is to manage the storing of data within the memory block MB. In response to these control commands, the unit MCU can generate a set of commands COM transmitted to the memory block MB and indicating where to fetch data Do from MB or where to put data Di into MB. Thus, when data Di is provided in port 3 by PROC1 so as to be written, the MCU transmits to the memory system 2 the set COM indicating, firstly, in which memory circuit MEM1, MEM2, MEM3, MEM4 or MEM5 the data Di has to be written by activating the corresponding input port I1, I2, I3, I4 or I5. This set COM also comprises a write address where the data has to be written in the selected memory circuit. Similarly, when data Do is required by PROC2 at the output port 4, the MCU sends a set COM which indicates to the memory block MB which memory circuit MEM is selected and comprises a read address within this memory circuit where the required data is to be fetched from.

It is to be noted that a write and a read operation cannot be performed simultaneously in the same memory circuit. Indeed, in order not to corrupt data that is required simultaneously for reading and writing, these two operations are not allowed at the same time. When the same memory circuit is selected for simultaneous reading and writing, the read operation is inactivated and the write operation is performed as usual. Simultaneous read and write operations can only be performed in two different memory circuits. As a result, access conflicts are resolved in a data processing arrangement in accordance with the invention. In a paragraph hereinafter, it will be described in detail how access conflicts that may occur are detected and avoided.

The memory block may be used in association with several processors. However, two processors cannot simultaneously access the memory system 2 for writing. Several units may, however, simultaneously access the memory block MB for reading a same set of data through 4. A memory block as described here is often used as a buffer memory between two processors in a processing chain.

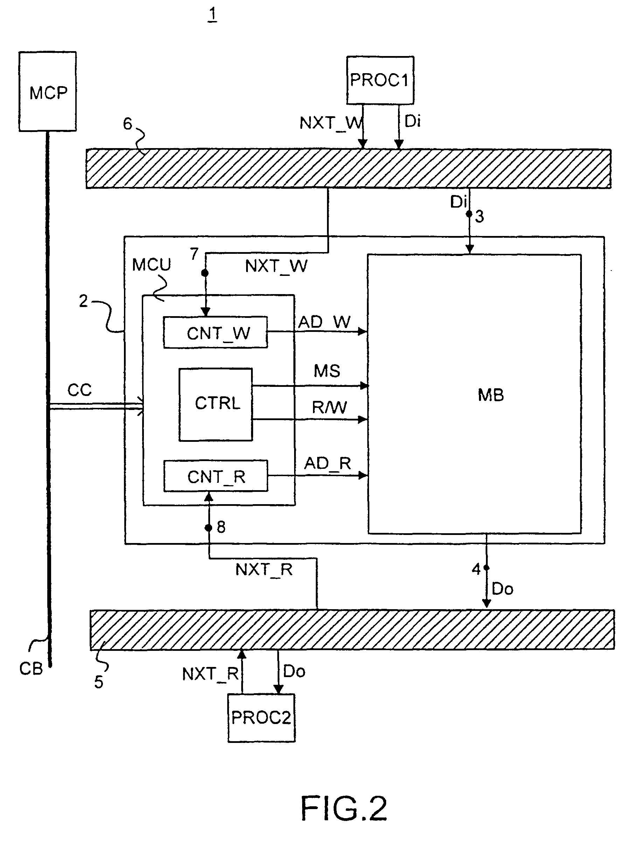

In a preferred embodiment of the invention, the control unit MCU, shown in Fig.2, transmits the set of commands COM which is composed of four signals : MS, R/W, AD_W and AD_R. Moreover, in this preferred embodiment the control unit MCU comprises a controller CTRL which, after setup by means of the control commands CC, transmits the signal MS to the memory block MB when data is to be read or written. This signal MS allows the selection of a memory circuit MEM1, MEM2, MEM3, MEM4 or MEM5. The controller CTRL also supplies the memory block MB with the R/W signal which indicates whether the selected memory circuit is required for reading or writing and allows the activation of its input port I1,..., I5 or its output port O1,..., O5, depending on whether the memory circuit is selected for reading or writing. This signal may, for example, be 1 when the selected memory circuit is required for writing and 0 when it is required for reading.

The memory control unit MCU also comprises two internal counters CNT_R and CNT_W that can be externally loaded. The value of the counter CNT_W is modified in response to a signal NXT_W received through a write-input port 7 of the control unit MCU and provides the signal AD_W, being the read address of the data Di to be written in the memory circuit selected by the controller CTRL. Thus, when the processor PROC1 provides data Di, it also sends the signal NXT_W through the crossbar 6 and the write input port 7. Data Di is written in the memory circuit selected by the controller CTRL at the location within this memory circuit which is indicated by AD_W. The counter CNT_W is then incremented in response to NXT_W and is ready to provide a new address AD_W indicating the next available location for next data Di provided by PROC1. The signal NXT_W permits, therefore, to increment the addresses within the selected memory circuit for continuous and asynchronous writing of data of Di. The counter CNT_W is, in this embodiment of the invention, incremented after the data is written into the selected memory circuit. CNT_W may also be decremented in response to NXT_W and before the data is written.

Analogously, when PROC2 requires new data Do from the memory block MB, it sends a signal NXT_R to the counter CNT_R through the crossbar 5 and through a read input port 8 of the control unit MCU. In response to the signal NXT_R, the counter CNT_R increments and provides a read address AD_R to MB. This address AD_R is the address of the data Do required by PROC2 within the memory circuit selected for reading by the controller CTRL. The counter CNT_R is incremented before the data is taken from the selected memory circuit. In an embodiment of the invention, the signals NXT_W and NXT_R are provided to the respective clock inputs of the counters and function, therefore, as asynchronous clocks for the counters CNT_W and CNT_R, respectively. A main advantage of this preferred embodiment is the asynchronous behavior of the data processing arrangement 1, allowing the memory system to be accessed by processors of different processing speed. In a possible implementation of the invention the two counters are connected to a clock signal and provide, for example, the read and write addresses at each rising edge of the clock signal. This implementation requires synchronous behavior of the processors which have to receive and provide data at the fixed frequency of the clock.

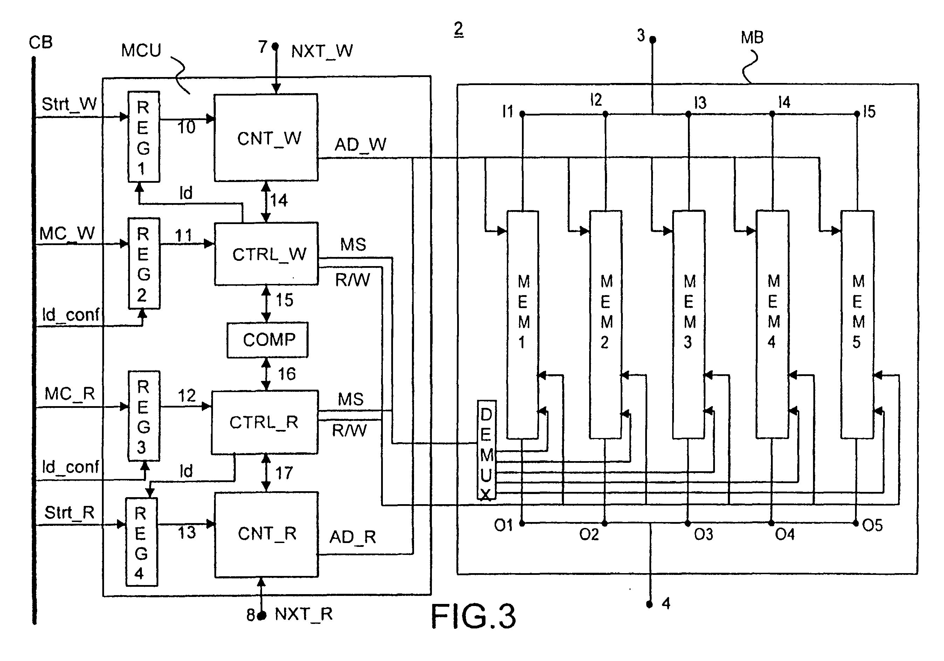

An improved embodiment of the invention is depicted in Fig.3. It shows a memory control unit MCU comprising the two counters CNT_W and CNT_R of Fig.2. In this enhanced embodiment of the invention, the controller CTRL described in Fig.2 is composed of two internal separate controllers CTRL_W, CTRL_R and a separate unit COMP for detecting and solving the access conflicts that may occur within the memory system 2. The control unit MCU consists of four registers REG1, REG2, REG3 and REG4. These registers receive the set of control commands CC from the master controller MCP. This set CC is formed in this case by four main command words : Strt_W, MC_W, MC_R and Strt_R. The commands MC_W and MC_R are stored in REG2 and REG3, respectively, in response to a load signal ld_conf transmitted on the control bus CB by the master controller MCP. Strt_W and Strt_R are loaded in REG1 and REGG4, respectively, in response to a ld signal from the controllers CTRL_W and CTRL_R, respectively. The content of REG1 is transmitted to the counter CNT_W via a connection line 10. The content of REG2 is transmitted to the controller CTRL_W via a connection line 11. The content of REG3 is transmitted to the controller CTRL_R via a connection line 12. The content of REG4 is transmitted to the counter CNT_R via a connection line 13. This ld_conf signal, transmitted on the control bus CB, activates the setup of the memory control unit MCU. In response to this signal ld_conf the contents of the registers REG2, REG3 are updated with the new control commands CC received on the control bus CB.

The memory block shown in Fig.3 is symmetrical, considering that an upper part of the memory block concerns the write function of the memory block and that a symmetrical lower part concerns the read function of the memory block. The following description is mainly focused on the elements of the memory block relating to the write function, but what is said for these elements is also valid for the symmetrical elements relating to the read function.

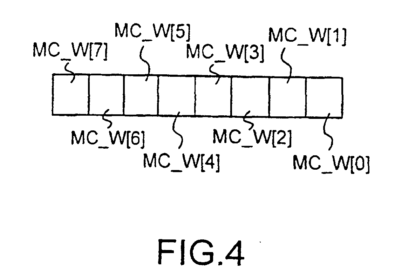

Strt_W, MC_W, MC_R and Strt_R may be 8-bit words in which the bits have the meanings described hereinafter. The signals MC_R and MC_W define a read pattern for a read processing cycle and a write pattern for a write processing cycle, respectively. A processing cycle starts with a new set of control commands CC loaded in the controllers CTRL_W, CTRL_R during the setup phase. The exact meaning of each bit in the 8-bit word MC_W, shown in Fig.4, is as follows :
- The least significant bit, MC_W[0], indicates if a write operation is enabled. When this bit is set to "1", the write operation is allowed ; when it is set to "0", the write operation is inactivated, the counter CNT_W is not incremented and the other bits of MC_W are ignored.
- MC_W[1] and MC_W[2] select the write operation pattern from among four possible patterns. Table 1 defines a code stored in the internal controller CTRL_W that gives a pattern for the write operation.

**Table 1**

| MC_W[2 ] | MC_W[1] | Write pattern |
|---|---|---|
| 0 | 0 | Reset of CNT_W (i.e. AD_W=8b0) via line 14 |
| 0 | 1 | Start the write operation from the address given by Strt_W, loaded in REG1 in response to the signal ld from CTRL_W |
| 1 | 0 | Continue the write operation from the current address, including the current memory circuit |
| 1 | 1 | Continue from the current address and from the memory circuit indicated by MC_W[3], MC_W[4] and MC_W[5] |

- MC_W[3], MC_W[4] and MC_W[5] indicate the value of the starting memory circuit number for writing during the writing cycle. In this embodiment of the invention the memory block MB comprises five independent memory circuits, the number of a memory circuit, which goes from 1 to 5, is in this case binary encoded in 3 bits.
- MC_W[6] is unused.
- The most significant bit, MC_W[7], indicates a need for change in the memory circuit number during the write cycle. When this bit is set to "0", the memory circuit number is automatically incremented when the 8-bit address counter CNT_W goes from the beginning of a memory circuit to the end. If the memory circuit number equals the maximum, here 5, the memory circuit number, coded in MC_W[3], MC_W[4] and MC_W[5], is set to 1. The controller CTRL_W has access to the current value of CNT_W for checking via the connection line 14. When this bit is set to "1", the memory circuit number coded in MC_W[3], MC_W[4] and MC_W[5] is not changed during the write cycle.

A similar description is also valid for the 8-bit word MC_R. Its bits have the same significance as the bits of MC_W for a read processing cycle this time. Thus, the controller CTRL_R checks and resets the value of CNT_R through a connection line 17 and allows the counter CNT_R to load a new value in response to a command ld.

An access conflict may occur when a memory circuit selected for a read operation is the same as the memory circuit selected for a write operation, i.e. MC_W[3]=MC_R[3]=MC_R[3], MC_W[4]=MC_R[4], MC_W[5]=MC_R[5]. A conflict is real when, in addition, the write and read operations are both enabled, i.e. MC_W[0]=1 and MC_R[0]=1. The unit COMP receives from CTRL_W the bits MC_W[0], MC_W[3], MC_W[4], MC_W[5], transmitted on 15, and from CTRL_R the bits MC_R[0], MC_R[3], MC_R[4], MC_R[5], transmitted on 16. The unit COMP compares bit-by-bit the bits received and when it detects a real memory access conflict (the memory circuit numbers selected for reading and writing are the same and the read and write operations are both enabled), it ensures, through 16, that the bit MC_R[0], which tells if the read operation is enabled, is read as a 0 by CTRL_R. In fact, the unit COMP does not exactly modify MC_R[0], which remains 1, but ensures that it is read as a 0 by the controller CTRL_R. The conflict stops either because one of the read and write operations is disabled during a new setup phase or because the number of the memory circuit to be accessed for reading or writing is modified during a new setup or within the course of the read or write operation. In such a case the unit COMP does not detect further conflict and the write operation is performed as usual.

Let it be considered that data Di needs to be written within the memory system 2. Di is provided in port 3 and at the same time CTRL_W and CNT_W transmit their respective signals MS, R/W and AD_W. The MS signal is, for example, the three coded bits representing the memory circuit number to be selected. This signal is transmitted to a demultiplexer DEMUX whose outputs are connected to each memory circuit MEM. The demultiplexer DEMUX transmits a 1 to the memory circuit whose number is coded in MS and transmits a 0 to all other memory circuits. The R/W signal is transmitted to all memory circuits, but is only taken into account by the selected memory circuit and also results in the activation of the input port of the memory circuit for the writing of Di. The write address AD_W is, as well, transmitted to all memory circuits but, again, is only taken into account by the selected memory circuit. The data is then transmitted in the memory block towards the activated input port and to the indicated location within the selected memory circuit.

In an ameliorated embodiment of the invention the memory system 2 may send a signal to indicate to the processors if it is ready to receive or provide data. This would prevent a processor from accessing the memory for reading when it is empty or for writing when it is already full.

The drawings and their description illustrate rather than limit the invention. It will be evident that there are numerous alternatives which fall within the scope of the appended Claims. In this respect, the following closing remarks are made.

There are numerous ways of physically spreading functions or functional elements over various units. In this respect, the drawings are merely diagrammatic, each representing only one possible embodiment of the invention.

## Claims

1. A memory system (MEM) coupled to a first processor (PROC1) designed to provide successive sets of input data and to a second processor (PROC2) designed to receive successive sets of output data, the memory system comprising:
- a plurality of memory circuits (MEM) for receiving the successive sets of input data and providing the successive sets of output data;
**characterized in that** the memory system further comprises:
- a memory control unit (MCU) programmable under control of control commands (CC) received from a master controller, the control commands being associated with a set of input data and a set of output data and the control commands defining one of a plurality of write patterns for the writing of the set of input data and one of a plurality of read patterns for the reading of the set of output data, the write pattern indicates a specific initial one of said memory circuits and a specific initial address in said initial write memory circuit to be written by the first processor, and the read pattern indicates a specific initial one of said memory circuits and a specific initial address in said initial read memory circuit to be read by the second processor; and the control unit being designed to determine, on the basis of the write pattern defined by the control commands, a write memory circuit and to generate a write-address (AD_W) in the write memory circuit when a data (Di) from the set of input data is provided by the first processor (PROC1); and, the control unit being further designed to determine, on the basis of the read pattern defined by the control commands, a read memory circuit and to generate a read-address (AD_R) in the read memory circuit when a data (Do) from the set of output data is required by the second processor (PROC2).

2. A memory system, as claimed in claim 1, wherein the control unit comprises:
- a write-counter (CNT_W) whose value is modified in association with a data received from the set of input data and which value indicates the write-address of the data in said write memory circuit;
- a read-counter (CNT_R) whose value is modified in association with a data provided from the set of output data and which value indicates the read-address of the data in said read memory circuit.

3. A memory system as claimed in claim 2, **characterized in that** the write counter value is incremented on an edge of a clock signal provided to the control unit and the read-counter value is incremented on an edge of a clock signal received at the control unit.

4. A memory system, as claimed in claim 1, wherein the control unit comprises a write-input port (7) for receiving a write-data signal (NXT_W) from the first processor in response to which the control unit generates the write-address and the control unit further comprises a read-input port (8) for receiving a read-data signal (NXT_R) from the second processor in response to which the control unit generates the read-address.

5. A memory system as claimed in Claim 1, wherein the write pattern indicates whether the writing of the set of input data is to be continued in a memory circuit next after the initial write memory circuit when an end of the initial write memory circuit is reached.

6. A memory system as claimed in Claim 1, wherein the indicated initial write-address or read-address is the last address where data was respectively written in or read from any of the plurality of memory circuits.

7. A memory system as claimed in Claim 1, wherein the indicated initial read-address is comprised in the control commands.

8. A method of processing data in a data processing arrangement (1) comprising:
- a first processor (PROC1) for providing successive sets of input data;
- a second processor (PROC2) for receiving successive sets of output data;
- a memory system (2) comprising a plurality of memory circuits (MEM) for receiving the successive sets of input data and providing the successive sets of output data,
**characterized in that** the method comprises, for a set of input data and a set of output data, the following steps:
- a configuration step in which the memory system is set up by means of control commands associated with the set of input data and the set of output data, the control commands defining one of a plurality of write patterns for the writing of the set of input data and one of a plurality of read patterns for the reading of the set of output data, the write pattern indicating a specific initial one of said memory circuits and specific initial address in said initial write memory circuit to be written by the first processor, and the read pattern indicating a specific initial one of said memory circuits and specific initial address in said initial read memory circuit to be read by the second processor; and,
- an execution step in which:
- on the basis of the write pattern, a write memory circuit is selected from the plurality of memory circuits and a write-address (AD_W) in the write memory circuit is generated when a data (Di) from the set of input data is provided by the first processor, and
- on the basis of the read pattern, a read memory circuit is selected from the plurality of memory circuits and a read-address (AD_R) in the read memory circuit is generated when a data (Do) from the set of output data is required by the second processor.

9. A data processing arrangement (1) comprising:
- a first processor (PROC1) for providing successive sets of input data;
- a second processor (PROC2) for receiving successive sets of output data;
- a memory system (2) as defined in claim 1.

## Patentansprüche

1. Speichersystem (MEM), das mit einem ersten Prozessor (PROC1) gekoppelt ist, vorgesehen zum Liefern aufeinander folgender Sätze mit Eingangsdaten, und mit einem zweiten Prozessor (PROC2), vorgesehen zum Empfangen aufeinander folgender Sätze mit Ausgangsdaten, wobei das Speichersystem die nachfolgenden Elemente umfasst:
- eine Anzahl Speicherschaltungen (MEM) zum Empfangen der aufeinander folgender Sätze mit Eingangsdaten und zum Liefern der aufeinander folgenden Sätze mit Ausgangsdaten;
**dadurch gekennzeichnet, dass** das Speichersystem weiterhin die nachfolgenden Elemente umfasst:
- eine Speichersteuereinheit (MCU), die unter Ansteuerung von Steuerbefehlen (CC), die von einem Mastercontroller empfangen werden, programmierbar ist, wobei die Steuerbefehle mit einem Satz von Eingangsdaten und einem Satz von Ausgangsdaten assoziiert sind und wobei die Steuerbefehle ein Muster einer Anzahl Schreibmuster definieren zum Schreiben des Satzes mit Eingangsdaten und ein Muster einer Anzahl Lesemuster definieren zum Lesen des Satzes mit Ausgangsdaten, wobei das Schreibmuster eine bestimmte Anfangsspeicherschaltung der genannten Speicherschaltungen angibt und eine bestimmte Anfangsadresse in der genannten Anfangsschreibspeicherschaltung, die von dem ersten Prozessor eingeschrieben werden soll, und wobei das Lesemuster eine bestimmte Anfangsspeicherschaltung der genannten Speicherschaltungen angibt und eine bestimmte Anfangsadresse in der genannten Anfangslesespeicherschaltung, die von dem zweiten Prozessor ausgelesen werden soll; und wobei die Steuereinheit vorgesehen ist, auf Basis des durch die Steuerbefehle definierten Schreibmusters eine Schreibspeicherschaltung zu bestimmen und in der Schreibspeicherschaltung eine Schreibadresse (AD_W) zu erzeugen, wenn ein Datum (Di) von dem Satz mit Eingangsdaten von dem ersten Prozessor (PROC1) geliefert wird; und wobei die Steuereinheit weiterhin vorgesehen ist um auf Basis des von den Steuerbefehlen definierten Lesemusters eine Lesespeicherschaltung zu bestimmen und in der Lesespeicherschaltung eine Leseadresse (AD_R) zu erzeugen, wenn von dem zweiten Prozessor (PROC2) ein Datum (Do) aus dem Satz von Ausgangsdaten angefordert wird.

2. Speichersystem nach Anspruch 1, wobei die Steuereinheit Folgendes umfasst:
- einen Schreibzähler (CNT_W), dessen wert in Verbindung mit einem aus dem Satz mit Eingangsdaten empfangenen Datum modifiziert wird und wobei dieser Wert die Schreibadresse des Datums in der genannten Schreibspeicherschaltung angibt;
- einen Lesezähler (CNT_R), dessen Wert in Verbindung mit einem aus dem Satz mit Ausgangsdaten empfangenen Datum modifiziert wird und wobei dieser Wert die Leseadresse des Datums in der genannten Lesespeicherschaltung angibt.

3. Speichersystem nach Anspruch 2, **dadurch gekennzeichnet, dass** der Schreibzählwert bei einer Flanke des Taktsignals erhöht wird, das der Steuereinheit zugeführt wird und der Lesezählwert bei einer Flanke eines Taktsignals erhöht wird, das an der Steuereinheit empfangen wird.

4. Speichersystem nach Anspruch 1, wobei die Steuereinheit einen Schreibeingangsport (7) aufweist zum Empfangen eines Schreibdatensignals (NXT_W) von dem ersten Prozessor, wobei in Reaktion darauf die Steuereinheit die Schreibadresse erzeugt und die Steuereinheit weiterhin einen Leseeingangsport (8) aufweist zum Empfangen eines Lesedatensignals (NXT_R) von dem zweiten Prozessor, wobei in Reaktion darauf die Steuereinheit die Leseadresse erzeugt.

5. Speichersystem nach Anspruch 1, wobei das Schreibmuster angibt, ob das Schreiben des Satzes mit Eingangsdaten in einer Speicherschaltung hinter der Anfangsschreibspeicherschaltung fortgesetzt werden soll, wenn ein Ende der Anfangsschreibspeicherschaltung erreicht ist.

6. Speichersystem nach Anspruch 1, wobei die angegebene Anfangsschreibadresse oder -leseadresse die letzte Adresse ist, wo Daten in oder aus einer der Anzahl Speicherschaltungen eingeschrieben bzw. ausgelesen wurden.

7. Speichersystem nach Anspruch 1, wobei die angegebene Anfangsleseadresse in den Steuerbefehlen eingeschlossen ist.

8. Verfahren zum Verarbeiten von Daten in einer Datenverarbeitungsanordnung (1), welche die nachfolgenden Elemente umfasst:
- eine ersten Prozessor (PROC1) zum Liefern aufeinander folgender Sätze mit Eingangsdaten,
- einen zweiten Prozessor (PROC2) zum Empfangen aufeinander folgender Sätze mit Ausgangsdaten,
- ein Speichersystem (2) mit einer Anzahl Speicherschaltungen (MEM) zum Empfangen der aufeinander folgenden Sätze mit Eingangsdaten und zum Liefern der aufeinander fol- . genden Sätze mit Ausgangsdaten,
**dadurch gekennzeichnet, dass** das Verfahren fiir einen Satz mit Eingangsdaten und einen Satz mit Ausgangsdaten die nachfolgenden Verfahrensschritte umfasst:
- einen Konfigurationsschritt, in dem das Speichersystem mit Hilfe von Steuerbefehlen, die mit dem Satz von Eingangsdaten und dem Satz von Ausgangsdaten assoziiert sind, aufgebaut wird, wobei die Steuerbefehle ein Muster einer Anzahl Schreibmuster zum Schreiben des Satzes mit Eingangsdaten definieren und ein Muster einer Anzahl Lesemuster zum Auslesen des Satzes mit Ausgangsdaten definieren, wobei das Schreibmuster eine bestimmte Schaltung der genannten Speicherschaltungen und eine bestimmte Anfangsadresse, die von dem ersten Prozessor in der genannten Schreibspeicherschaltung geschrieben werden soll, angibt, und wobei das Lesemuster eine bestimmte Anfangsschaltung der genannten Speicherschaltungen und eine bestimmte Anfangsadresse in der genannten Anfangslesespeicherschaltung, die von dem Prozessor ausgelesen werden soll, angibt, und
- einen Durchführungsschritt, in dem:
-- auf Basis des Schreibmusters eine Schreibspeicherschaltung aus der Anzahl Speicherschaltungen selektiert wird und eine Schreibadresse (AD_W) in der Schreibspeicherschaltung erzeugt wird, wenn ein Datum (Di) aus dem Satz mit Eingangsdaten von dem ersten Prozessor geliefert wird, und
-- auf Basis des Lesemusters eine Lesespeicherschaltung aus der Anzahl Speicherschaltungen selektiert wird und eine Leseadresse (AD_R) in der Lesespeicherschaltung erzeugt wird, wenn ein Datum (Do) aus dem Satz von Ausgangsdaten von dem zweiten Prozessor abgerufen wird.

9. Datenverarbeitungsanordnung (1) welche die nachfolgenden Elemente umfasst:
- einen ersten Prozessor (PROC1) zum Liefern aufeinander folgender Sätze mit Eingangsdaten;
- einen zweiten Prozessor (PROC2) zum Empfangen aufeinander folgender Sätze mit Ausgangsdaten;
- ein Speichersystem (2) wie in Anspruch 1 definiert.

## Revendications

1. Système de mémoire (MEM) couplé à un premier processeur (PROC1) conçu pour fournir des ensembles successifs de données d'entrée et à un second processeur (PROC2) conçu pour recevoir des ensembles successifs de données de sortie, le système de mémoire comprenant :
- une pluralité de circuits de mémoire (MEM) pour recevoir les ensembles successifs de données d'entrée et fournir les ensembles successifs de données de sortie;
**caractérisé en ce que** le système de mémoire comprend en outre :
- une unité de gestion de mémoire (MCU) programmable sous le contrôle d'instructions de commande (CC) reçues d'un contrôleur central, les instructions de commande étant associées avec un ensemble de données d'entrée et un ensemble de données de sortie, et les instructions de commande définissant un d'une pluralité de schémas d'écriture pour l'écriture de l'ensemble de données d'entrée et un d'une pluralité de schémas de lecture pour la lecture de l'ensemble de données de sortie, le schéma d'écriture indiquant dans quel circuit de mémoire initial spécifique parmi lesdits circuits de mémoire et à quelle adresse initiale spécifique dans ledit circuit de mémoire d'écriture initial le premier processeur doit effectuer une écriture, et le schéma de lecture indiquant dans quel circuit de mémoire initial spécifique parmi lesdits circuits de mémoire et à quelle adresse initiale spécifique dans ledit circuit de mémoire de lecture initial le second processeur doit effectuer une lecture; et l'unité de gestion étant conçue pour déterminer, sur la base du schéma d'écriture défini par les instructions de commande, un circuit de mémoire d'écriture et pour générer une adresse d'écriture (AD_W) dans le circuit de mémoire d'écriture lorsque des données (Di) provenant de l'ensemble de données d'entrée sont fournies par le premier processeur (PROC1); et l'unité de gestion étant en outre conçue pour déterminer, sur la base du schéma de lecture défini par les instructions de commande, un circuit de mémoire de lecture et pour générer une adresse de lecture (AD_R) dans le circuit de mémoire de lecture lorsque des données (Do) provenant de l'ensemble de données de sortie sont demandées par le second processeur (PROC2).

2. Système de mémoire selon la revendication 1 **caractérisé en ce que** l'unité de gestion comprend :
- un compteur d'écriture (CNT_W) dont la valeur est modifiée en association avec des données reçues provenant de l'ensemble de données d'entrée et dont la valeur indique l'adresse d'écriture des données dans ledit circuit de mémoire d'écriture;
- un compteur de lecture (CNT_R) dont la valeur est modifiée en association avec des données reçues provenant de l'ensemble de données de sortie et dont la valeur indique l'adresse de lecture des données dans ledit circuit de mémoire de lecture.

3. Système de mémoire selon la revendication 2 **caractérisé en ce que** la valeur du compteur d'écriture est incrémentée sur un flanc d'un signal d'horloge fourni à l'unité de gestion et la valeur du compteur de lecture est incrémentée sur un flanc d'un signal d'horloge reçu à l'unité de gestion.

4. Système de mémoire selon la revendication 1 **caractérisé en ce que** l'unité de gestion comprend un port d'entrée d'écriture (7) pour recevoir un signal de données d'écriture (NXT_W) du premier processeur en réponse auquel l'unité de gestion génère l'adresse d'écriture et **en ce que** l'unité de gestion comprend en outre un port d'entrée de lecture (8) pour recevoir un signal de données de lecture (NXT_R) du second processeur en réponse auquel l'unité de gestion génère l'adresse de lecture.

5. Système de mémoire selon la revendication 1 **caractérisé en ce que** le schéma d'écriture indique si l'écriture de l'ensemble de données d'entrée doit être poursuivie dans un circuit de mémoire suivant immédiatement le circuit de mémoire d'écriture initial lorsqu'une extrémité du circuit de mémoire d'écriture initial est atteinte.

6. Système de mémoire selon la revendication 1 **caractérisé en ce que** l'adresse d'écriture initiale ou adresse de lecture initiale indiquée est la dernière adresse où des données ont été respectivement écrites ou lues dans un quelconque d'une pluralité de circuits de mémoire.

7. Système de mémoire selon la revendication 1 **caractérisé en ce que** l'adresse de lecture initiale indiquée est comprise dans les instructions de commande.

8. Procédé de traitement de données dans un dispositif de traitement de données (1) comprenant :
- un premier processeur (PROC1) pour fournir des ensembles successifs de données d'entrée;
- un second processeur (PROC2) pour recevoir des ensembles successifs de données de sortie;
- un système de mémoire (2) comprenant une pluralité de circuits de mémoire (MEM) pour recevoir les ensembles successifs de données d'entrée et fournir les ensembles successifs de données de sortie,
**caractérisé en ce que** le procédé comprend, pour un ensemble de données d'entrée et un ensemble de données de sortie, les étapes suivantes :
- une étape de configuration dans laquelle le système de mémoire est configuré au moyen d'instructions de commande associées avec l'ensemble de données d'entrée et l'ensemble de données de sortie, les instructions de commande définissant un d'une pluralité de schémas d'écriture pour l'écriture de l'ensemble de données d'entrée et un d'une pluralité de schémas de lecture pour la lecture de l'ensemble de données de sortie, le schéma d'écriture indiquant dans quel circuit de mémoire initial spécifique parmi lesdits circuits de mémoire et à quelle adresse initiale spécifique dans ledit circuit de mémoire d'écriture initial le premier processeur doit effectuer une écriture, et le schéma de lecture indiquant dans quel circuit de mémoire initial spécifique parmi lesdits circuits de mémoire et à quelle adresse initiale spécifique dans ledit circuit de mémoire de lecture initial le second processeur doit effectuer une lecture; et
- une étape d'exécution dans laquelle :
- sur la base du schéma d'écriture, un circuit de mémoire d'écriture est sélectionné parmi la pluralité de circuits de mémoire et une adresse d'écriture (AD_W) dans le circuit de mémoire d'écriture est générée quand des données (Di) provenant de l'ensemble de données d'entrée sont fournies par le premier processeur, et
- sur la base du schéma de lecture, un circuit de mémoire de lecture est sélectionné parmi la pluralité de circuits de mémoire et une adresse de lecture (AD_R) dans le circuit de mémoire de lecture est générée quand des données (Do) provenant de l'ensemble de données de sortie sont demandées par le second processeur.

9. Dispositif de traitement de données (1) comprenant :
- un premier processeur (PROC1) pour fournir des ensembles successifs de données d'entrée;
- un second processeur (PROC2) pour recevoir des ensembles successifs de données de sortie;
- un système de mémoire (2) selon la revendication 1.
